# EUROPÄISCHE PATENTANMELDUNG

(11) **EP 2 138 391 A2**
(43) Veröffentlichungstag der Anmeldung: **30.12.2009**
(21) Anmeldenummer: 09006828.9
(22) Anmeldetag: 20.05.2009
(51) Int. Cl.: B62J 13/04

(54) **Schutzanordnung einer Antriebskette sowie Verwendung dafür**

(30) Priorität: 27.06.2008 DE 102008031803; 27.06.2008 DE 102008081803
(71) Anmelder: Carstensen, Uwe, 20459 Hamburg (DE)
(72) Erfinder: Carstensen, Uwe, 20459 Hamburg (DE)
(74) Vertreter: Weber, Klaus

(57) **Zusammenfassung**

Die Erfindung betrifft eine Schutzanordnung mit einer aus gelenkig verbundenen Kettengliedern (11) gebildeten Antriebskette (1), insbesondere Fahrradkette, und einer die Kettenglieder (11) im Wesentlichen umschließenden, elastischen Hülle (3), die mit der Antriebskette (1) um Kettenräder (2) umläuft, wobei die Hülle (3) aus einem Wellschlauch- oder Wellrohrabschnitt besteht. Ferner betrifft die Erfindung die Verwendung eines Wellschlauch- oder Wellrohrabschridtes (3) mit einem durchgehenden Längsschlitz (30) als Kettenschutz.

## Beschreibung

Die Erfindung betrifft eine Schutzanordnung mit einer aus gelenkig verbundenen Kettengliedern gebildeten Antriebskette, insbesondere Fahrradkette, und einer die Kettenglieder im Wesentlichen umschließenden, elastischen Hülle, die mit der Antriebskette um Kettenräder umläuft sowie eine Verwendung eines Wellschlauches oder Wellrohres dafür.

Kettenschutzeinrichtungen sind im Stand der Technik in unterschiedlichen Ausgestaltungen bekannt. Für Fahrräder sind insbesondere am Fahrradrahmen, mechanisch von der Antriebskette getrennt angeordnete Kettenschutzbleche bekannt, die jedoch eine Vielzahl von Nachteilen aufweisen.

Aus der DE 37 27 839 C2 ist eine Abdeckeinrichtung für eine Fahrrad-Antriebskette bekannt, die unmittelbar mit der Kette verbunden ist. Dabei ist für jedes Kettenglied ein kleines Abdeckungselement vorgesehen, die aneinanderstoßend einen beim Kettenumlauf nach außen im Wesentlichen geschlossenen Kettenschutz bilden. Auf der Innenseite sind die Abdeckungen offen ausgebildet, damit die Zähne der Kettenräder in die Kettenglieder eingreifen können. Jedes Abdeckungselement umgreift dabei U-förmig jeweils ein Kettenglied. Nachteilig ist, dass beim Umlauf um ein Kettenrad die Abdeckungselemente je nach Durchmesser des Kettenrades einen mehr oder minder großen Sektor der Kette freigeben. Entsprechend können Schmierstoffe nach außen dringen bzw. Schmutz zur Kette gelangen, so dass ein durchgängiger Schutz der Kette nicht gewährleistet ist.

Aus der CH 179633 ist ein Kettenschutz für Fahrzeuge, insbesondere Fahrräder bekannt, der aus einer in sich geschlossenen, an der Innenseite der Kette geschlitzten Hülle aus Gummi besteht, wobei die Hülle mit der Kette umlaufend ausgebildet ist. Nachteilig ist, dass mit einer Gummihülle ein dauerhafter Kettenschutz nicht erreicht werden kann, da die Gummihülle beim Umlauf schnell verschleißt.

Ferner sind Wellschläuche, häufig auch Wellrohr genannt, als Umhüllungen für elektrische Kabel oder zum Transport von Flüssigkeiten und Gasen bekannt. Der Wellschlauch wird bevorzugt aus thermoplastischen Kunststoffen hergestellt und weist eine hohe Flexibilität senkrecht zur Längsrichtung bei hoher Formsteifigkeit in Bezug auf seinen Querschnitt auf. Ferner sind in Längsrichtung geschlitzte Wellschläuche als sog. lnstallationsschläuche oder auch als Marderschutzschlauch zur Ummantelung von verbissempfindlichen Kabeln oder Schläuchen bekannt.

Ausgehend vom eingangs genannten Stand der Technik ist es Aufgabe der Erfindung, eine Schutzanordnung für Antriebsketten anzugeben, die bei einfacher Montagemöglichkeit eine möglichst zuverlässige und langlebige Schutzfunktion für die Antriebskette gewährleistet.

Diese Aufgabe wird gelöst mit einer Schutzanordnung gemäß Anspruch 1. Ferner wird die Aufgabe gelöst mit einer Verwendung gemäß Anspruch 8.

Dadurch, dass die Hülle aus einem Wellschlauch- oder Wellrohrabschnitt besteht, wird ein Kettenschutz verwirklicht, der aufgrund der hervorragenden Flexibilität senkrecht zur Längsrichtung des Wellschlauches das Abrollen der Kette kaum beeinflusst und somit einen hohen Benutzungskomfort bietet. Zudem ist der Wellschlauch aufgrund der hohen Wechselbiegefähigkeit zur Längsrichtung und seiner Eigensteifigkeit in Bezug auf seinen Querschnitt nicht vollflächig an der Antriebskette anliegend ausgebildet, so dass gegenüber einer an der Kette anliegenden Gummiholle eine erheblich längere Einsatzzeit zu verwirklichen ist.

Wenn die Hülle übereinstimmend mit der Antriebskette endlos ausgebildet ist und auf ihrer den Kettenrädern zugewandten Innenseite Öffnungen zum Durchgreifen der Zähne der Kettenräder in die Kettenglieder aufweist, bleibt der Kettenlauf um die Kettenräder weitgehend unbeeinflusst vom Wellschlauch- oder Wellrohrabschnitt. Bevorzugt sind die Öffnungen als ein durchgehender Längsschlitz ausgebildet. Damit ist die Anordnung des Wellschlauchs auf der Kette unabhängig von ihrer momentanen Orientierung in Längsrichtung. Ein leichtes Verschieben der Hülle relativ zur Kette bleibt bei einem durchgehenden Längsschlitz ohne Einfluss auf die Laufeigenschaften der Kette.

Dadurch, dass der Längsschlitz eine Weite aufweist, die kleiner ist als die Breite der Kettenglieder, wird eine selbsttätige Klemmwirkung des leicht aufgeweiteten Wellschlauchs auf die Kettenglieder der zu umhüllenden Antriebskette ausgeübt. Ein unerwünschtes Abfallen des Wellschlauchs von der Kette wird so sicher vermieden. Aufgrund der hohen Formstabilität in radialer Querschnittsrichtung des Wellschlauches bleibt die Klemmwirkung auch über einen langen Einsatzzeitraum bestehen.

Wenn zur Bildung der endlosen Hülle die Enden des Wellschlauch- oder Wellrohrabschnitts miteinander dauerhaft oder lösbar mit einem Verbindungsmittel verbunden sind, wird ein Durchlassen von Schmierstoffen im Bereich der Stoßstelle der zusammentreffenden beiden Wellschlauchenden vermieden. Bevorzugt umfasst das Verbindungsmittel ein formschlüssiges Ineinanderstecken, eine Druckverbindung und/oder eine Verkiebung/Verschweißung.

Als thermoplastische Polymere eignen sich zur Herstellung der Kunststoffwellrohre insbesondere Polyamid (PA), Polyethylen (PE), Polyurethan (PU). Polypropylen (PP) oder Polytetrafluorethylen (PTFE). Wellschlauch bzw. Wellrohr aus diesem Material zeichnet sich durch hohe Abriebfestigkeit und Chemikalien- sowie insbesondere Ölbeständigkeit aus.

Handelsüblicher Wellschlauch oder Wellrohr, wie er/es als Kabelschutz insbesondere im Maschinen- und Roboterbau bekannt ist, kann mit einem durchgehenden Längsschlitz versehen bei geeigneter Dimensionerung als Schutz für eine Antriebskette verwendet werden. Dabei werden der Wellschlauch- oder Wellrohrabschnitt auf die Länge einer zu umhüllenden Antriebskette abgelängt, durch Aufdehnen des Längsschlitzes von außen über die Antriebskette aufgebracht und die Enden des Wellschlauch- oder Wellrohrabschnitt miteinander verbunden.

Der Wellschlauch bzw. das Wellrohr zeichnet sich durch seine hohe Flexibilität in Laufrichtung der Kette aus. Der Wellschlauch kann dauerhaft und verschleißarm um die Krümmungen der Kettenräder, beim Fahrrad dem hinteren Kettenritzel und dem vorderen Kettenblatt mit der Kette umlaufen. Dabei weist der Wellschlauch aufgrund seiner eingeprägten Oberflächenstruktur eine hohe Steifigkeit in seinem Querschnitt, also in seiner radialen Erstreckung auf, so dass eine gewünschte Klammerwirkung auf der zu umhüllenden Kette erreicht werden kann.

Ergänzend weist der Wellschlauch bzw. das Wellrohr insbesondere bei Vorstauchung auch in seiner Längsausdehnung eine ausreichende Flexibilität aus, um verschleißbedingte Längungen der Kette im Gebrauch zu kompensieren und auch eine leichte Verbindung der Wellschlauchenden zu einem endlosen Kettenschutz zu ermöglichen.

Nachfolgend wird ein Ausführungsbeispiel anhand der beiliegenden Zeichnungen detailliert beschrieben.

Darin zeigt:
- Fig. 1: in einer teils geschnittenen Seitenansicht eine erfindungsgemäße Schutzanordnung und
- Fig. 2: einen Querschnitt durch die erfindungsgemäße Schutzanordnung.

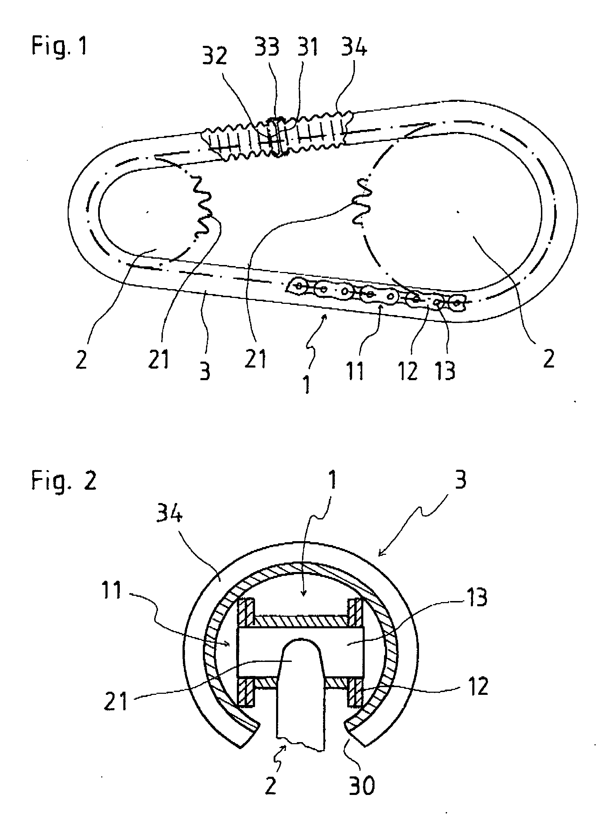

In Fig. 1 ist in einer Seitenansicht eine Schutzanordnung mit einer Antriebskette 1, die um zwei Kettenräder 2, 2 umlaufend angeordnet ist, und einer Hülle 3, die die Antriebskette 1 im Wesentlichen umschließt, dargestellt. Die Antriebskette 1 ist in der üblichen Weise aus einer Vielzahl von miteinander gelenkig verbundenen Kettengliedern 11 als geschlossene Endloskette ausgebildet. In Fig. 1 ist die in der Hülle 3 aufgenommene Kette 1 lediglich mit einigen Kettengliedern 11 angeschnitten dargestellt. Der Umlauf der Kette 1 ist strichpunktiert dargestellt. Die Kette 1 steht in Eingriff mit an den Kettenrädern 2, 2 angeordneten Zähnen 21 um ein Drehmoment von einem Kettenrad 2 mittels der Antriebskette 1 auf das andere Kettenrad 2 zu übertragen. Eine derartige Antriebsanordnung ist beispielsweise bei Fahrrädern bekannt.

Die Antriebskette 1 umschließend ist die Hülle 3 in Form eines Wellschlauch-oder Wellrohrabschnittes vorgesehen. Der Wellschlauch- oder Wellrohrabschnitt 3 weist eine Länge entsprechend der Antriebskette 1 auf, so dass die beiden Enden 31, 32 (siehe Fig. 2) aneinanderstoßen und ebenfalls eine geschlossene, Endloshülle 3 bilden. Der Wellschlauch weist ein Wellenprofil 34 auf, wie in Fig. 1 angedeutet ist. Das Wellenprofil kann im Längsschnitt eine runde, eine rechteckige oder eine zickzack Wellenlinie aufweisen. Wichtig ist, dass der Wellschlauch aufgrund seines Wellenprofils 34 eine hohe Formstabilität seines Querschnitts aufweist.

Der Wellschlauch- oder Weflrohrabschnitt 3 weist auf seiner den Kettenrädern 2, 2 zugewandten Innenseite einen durchgehenden Längsschlitz 30 auf, der ein Durchgreifen der Zähne 21 der Kettenräder 2, 2 in die Kettenglieder 11 der Antriebskette 1 erlaubt.

In Fig. 2 ist ein Querschnitt durch die Schutzanordnung mit Antriebskette 1 und Wellschlauch- oder Wellrohrabschnitt 3 im Bereich eines Kettenrades 2 dargestellt. Das Kettenrad 2 ist lediglich mit seinem strichpunktiert dargestellten, kreisförmigen Kettenradablauf in Fig. 1 wiedergegeben. Die auf dem Kettenrad 2 angeordneten Zähne 21 sind nur über einen kleinen Sektor des Kettenradablaufs dargestellt. Die Antriebskette 1 zeigt in Fig. 2 ein im Querschnitt dargestelltes Kettenglied 11. Das Kettenglied 11 weist seitliche Laschen 12 auf, die bei bekannten Fahrradketten abwechselnd innenliegend als lnnenlasche und außenliegend als Außenlasche bezeichnet werden und mit Kettenbolzen 13 verbunden sind. Wie aus Fig. 2 ersichtlich, umgreift der Wellschlauch- oder Wellrohrabschnitt 3 die Antriebskette 1, so dass der Wellschlauch mit seiner Innenseite lediglich punktförmig an den Laschen 12 der Kettenglieder 11 anliegt. Im in Fig. 2 dargestellten Ausführungsbeispiel weist der Querschnitt des Wellrohrabschnitts 3 Kreisform auf. Ebenso sind rechteckige, bevorzugt abgerundete Querschnitte möglich. Wichtig ist, dass der Wellschlauch eine hohe Flexibilität und Wechselbiegefähigkeit senkrecht zur Längsrichtung und hohe Steifigkeit in seinem Querschnitt ausweist.

Weiter ist in Fig. 1 schematisch der Stoßpunkt zur Bildung einer Endloshülle 3 dargestellt. Der Wellschlauch- oder Wellrohrabschnitt 3 ist entsprechend der Länge der Antriebskette 1 abgelängt, so dass bei Montage des Wellschlauchabschnittes 3 auf der Antriebskette 1 das erste Ende 31 unmittelbar dem zweiten Ende 32 gegenübersteht. Ferner ist ein Verbindungsmittel 33 als formschlüssig übergreifendes Element zur Verbindung der beiden Enden 31, 32 vorgesehen. Das Verbindungsmittel 33 greift beispielsweise in das Wellenprofil 34 des Wellschlauch- oder Wellrohrabschnittes 3. Eine solche Verbindung kann lösbar ausgestaltet sein, um nach Entfernung des Verbindungsmittel 33 den Wellschlauch- oder Wellrohrabschnitt 3 von der Antriebskette 1, beispielsweise für Wartungszwecke, entfernen zu können. Ebenso kann das Verbindungsmittel 33 durch Verklebung mit dem ersten Ende 31 und zweiten Ende 32 dauerhaft montiert sein.

Nachfolgend wird die Montage der Schutzanordnung beschrieben.

Der Wellschlauch- oder Wellrohrabschnitt 3 wird entsprechend der Länge der zu umhüllenden Antriebskette 1 abgelängt. Dabei ist der Abschnitt deutlich länger als die Länge der Antriebskette zu bemessen. Diese Überlänge dient dazu, den Wellschlauch- oder Wellrohrabschnitt 3 bei oder nach Montage auf der Kette stauchen zu können, um den notwendigen Druck bei einer Druckverbindung zu schaffen und weiterhin zu gewährleisten, dass bei verschleißbedingter Längung der Antriebskette die umfassende Schutzfunktion der Umhüllung erhalten bleibt. Anschließend wird, wegen der hohen Klammerwirkung der formsteifen Querschnitte sinnvollerweise mit einem Werkzeug, durch Aufdehnen des Längsschlitzes 30 der Wellschlauch- oder Wellrohrabschnitt 3 über die Antriebskette 1 in seine bestimmungsgemäße Lage gedrückt. Dies kann auch bei einer bereits montierten Antriebskette, beispielsweise bei einem Fahrrad zur Nachrüstung erfolgen, ohne dass die Kette und/oder ein Kettenrad ausgebaut werden muss. Alternativ kann der Wellschlauch- oder Welfrohrabschnitt 3 bei nicht montierter, offener Antriebskette 1 durch Aufziehen über die Kette, Stauchung und anschließender Verbindung der Endglieder der Antriebskette zu einer Endloskette in der üblichen Weise montiert werden. Wird nach dieser Alternative verfahren ist bei der Bemessung der Ablängung des Wellschlauch-oder Wellrohrabschnittes 3 zu berücksichtigen, dass dieser anschließend so stark gestaucht werden kann, dass die beiden Endglieder der Kette für die Dauer der Montage der Verbindung zur Endloskette zugänglich bleiben.

Nach vollständiger Aufbringung des Wellschlauch- oder Wellrohrabschnitts 3 werden die einander gegenüberstehenden Enden 31, 32 mit dem Verbindungsmittel 33 verbunden. Dabei kann die Verbindung auch mittels formschlüssigen Ineinanderstecken der gegenüberstehenden Enden ohne gesondertes Verbindungsmittel, über eine Druckverbindung und/oder durch Verklebung oder Verschweißung erfolgen.

Die erfindungsgemäße Schutzanordnung zeichnet sich durch Leichtgängigkeit und Geräuschfreiheit beim Betrieb aus. Die Kette wird durch die Schutzanordnung im Wesentlichen vor Witterungseinflüssen, Korrosion und Schmutzeintrag geschützt. Ferner konserviert die Umhüllung die Schmierung der Kette.

Bei der Verwendung der erfindungsgemäßen Schutzanordnung an Fahrrädern können gesondert anzuschraubende Schutzvorrichtungen, wie Kettenschutzbleche und Kettenkästen, entfallen. Gleichwohl wird der Benutzer des Fahrrades vor dem Kontakt mit Schmierstoffen der Kette geschützt. Ebenso wird der Benutzer beim Falten und Transport von Falträdern weitgehend vor einem direkten Kontakt mit der Kette geschützt. Allerdings empfiehlt es sich das vordere Kettenblatt des Fahrrades mit einem handelsüblichen Kettenschutzring auszustatten um zu verhindern, dass sich ein Hosenbein zwischen Kette und Kettenblatt verfängt.

Die erfindungsgemäße Schutzanordnung ist bei Fahrrädern ohne Kettenschaltung, insbesondere bei Nabenschaltungsfahrrädem für Antriebsketten aller Breiten und für alle Kettenraddurchmesser verwendbar.Sie ist auch bei Austausch der Antriebskette wiederverwendbar.

### Bezugszeichenliste

- 1: Antriebskette
- 11: Kettenglied
- 12: Lasche
- 13: Kettenbolzen

- 2: Kettenrad
- 21: Zahn

- 3: Hülle, Wellschlauch- oder Wellrohrabschnitt
- 30: Längsschlitz
- 31: erstes Ende
- 32: zweites Ende
- 33: Verbindungsmittel
- 34: Wellenprofil

## Patentansprüche

1. Schutzanordnung mit einer aus gelenkig verbundenen Kettengliedern (11) gebildeten Antriebskette (1), insbesondere Fahrradkette, und einer die Kettenglieder (11) bis auf ihrer den Kettenrädern (2) zugewandten Innenseite, die Öffnungen zum Durchgreifen der Zähne (21) der Kettenräder (2) in die Kettenglieder (11) aufweist, umschließenden, übereinstimmend mit der Antriebskette (1) endlos ausgebildeten, elastischen Hülle (3), die mit der Antriebskette (1) um Kettenräder (2) umläuft, **dadurch gekennzeichnet, dass** die Hülle (3) aus einem Wellschlauch- oder Wellrohrabschnitt besteht.

2. Schutzanordnung nach Anspruch 1, **dadurch gekennzeichnet, dass** die Öffnungen als ein durchgehender Längsschlitz (30) ausgebildet sind.

3. Schutzanordnung nach Anspruch 2, **dadurch gekennzeichnet, dass** der Längsschlitz (30) eine Weite aufweist, die kleiner ist als die Breite der Kettenglieder (11).

4. Schutzanordnung nach Anspruch 1, 2 oder 3, **dadurch gekennzeichnet, dass** zur Bildung der endlosen Hülle (3) die Enden (31, 32) des Wellschlauch- oder Wellrohrabschnitts miteinander dauerhaft oder lösbar mit einem Verbindungsmittel (33) verbunden sind.

5. Schutzanordnung nach Anspruch 4, **dadurch gekennzeichnet, dass** das Verbindungsmittel (33) ein formschlüssiges Ineinanderstecken, eine Druckverbindung und/oder eine VerklebungNerschweißung umfasst.

6. Schutzanordnung nach einem der vorangehenden Ansprüche, **dadurch gekennzeichnet, dass** die Hülle (3) aus Polyamid (PA), Polyethylen (PE), Polyurethan (PU), Polypropylen (PP) und/oder Polytetrafluorethylen (PTFE) besteht.

7. Verwendung eines Wellschlauch- oder Wellrohrabschnitt (3) mit einem durchgehenden Längsschlitz (30) als Kettenschutz.

8. Verwendung nach Anspruch 7, **dadurch gekennzeichnet, dass** der Wellschlauch-oder Wellrohrabschnitt (3) entsprechend Vorstauchung und der Länge einer zu umhüllenden Antriebskette (1) abgelängt, durch Aufdehnen des Längsschlitzes (30) von außen über die Antriebskette (1) aufgebracht und die Enden (31, 32) des Wellschlauch- oder Wellrohrabschnittes miteinander verbunden werden.

9. Verwendung nach Anspruch 7, **dadurch gekennzeichnet, dass** der Wellschlauch-oder Wellrohrabschnitt (3) durch Aufziehen über die Antriebskette (1) auf dieser aufgebracht und die Kette (1) mit Wellschlauch- oder Wellrohrabschnitt (3) zu einer Endloskette verbunden wird.
